# EUROPEAN PATENT APPLICATION

(11) **EP 4 760 805 A1**
(43) Date of publication of application: **17.06.2026**
(21) Application number: 24851015.8
(22) Date of filing: 06.08.2024
(51) Int. Cl.: H01M 4/36, H01M 4/525, H01M 4/505, H01M 4/04, H01M 4/131, H01M 10/0525

(54) **DOUBLE-LAYER COATED TERNARY MATERIAL AND PREPARATION METHOD THEREFOR, AND LITHIUM-ION BATTERY**

(30) Priority: 09.08.2023 CN 202311002060
(71) Applicant: BYD Company Limited, Shenzhen, Guangdong 518118 (CN)
(72) Inventor: FU, Qiang, Shenzhen, Guangdong 518118 (CN); XU, Chaqing, Shenzhen, Guangdong 518118 (CN); CAO, Wenyu, Shenzhen, Guangdong 518118 (CN); ZHONG, Hao, Shenzhen, Guangdong 518118 (CN); FENG, Kai, Shenzhen, Guangdong 518118 (CN)
(74) Representative: Schott, Jakob Valentin
(86) International application number: PCT/CN2024/110187
(87) International publication number: WO 2025/031370

(57) **Abstract**

A double-layer coated ternary material and a preparation method therefor, and a lithium-ion battery. The double-layer coated ternary material comprises a monocrystalline high-nickel ternary material, a polycrystalline nanometer ternary material layer coated outside the monocrystalline high-nickel ternary material, and a modification compound layer coated outside the polycrystalline nanometer ternary material layer, wherein the modification compound layer comprises a B-containing compound and an Al-containing compound. By coating the monocrystalline high-nickel ternary material with the polycrystalline nanometer ternary material, the rate capability and specific discharge capacity of the material can be improved, and the impedance can be reduced. The modification compound layer can integrate the advantages of the B-containing compound and the Al-containing compound, and can effectively improve the first-cycle specific charge-discharge capacity, initial efficiency, normal-temperature cycle performance and high-temperature cycle performance of the double-layer coated ternary material.

## Description

### CROSS-REFERENCE TO RELATED APPLICATIONS

The present disclosure claims priority to Patent Application No. 202311002060.2, filed with the China National Intellectual Property Administration on August 9, 2023 and entitled "DOUBLE-LAYER-COATED TERNARY MATERIAL, PREPARATION METHOD THEREFOR, POSITIVE ELECTRODE PLATE, LITHIUM-ION BATTERY, AND ELECTRICAL EQUIPMENT", which is incorporated herein by reference in its entirety.

### TECHNICAL FIELD

The present disclosure relates to the field of lithium-ion battery materials, and specifically, to a double-layer-coated ternary material, a preparation method therefor, and a lithium-ion battery.

### BACKGROUND

A layered nickel-cobalt-manganese ternary positive electrode material has advantages such as a high discharge specific capacity, good cycle performance, and a stable structure. Ternary materials are classified into micron single-crystal materials and polycrystalline materials composed of nano primary particles in terms of mainstream morphology. The polycrystalline ternary material has a higher discharge specific capacity and better rate performance but poorer high-temperature cycle performance, while the micron single-crystal ternary material has better high-temperature cycle performance but a lower discharge specific capacity and poorer rate performance and low-temperature performance.

In a related technology, a coating technology and/or a doping technology are/is usually used to improve overall performance of the single-crystal ternary material and/or the polycrystalline ternary material, but this is not desirable. Therefore, there is an urgent need for a ternary positive electrode material having both the advantage of the high-temperature cycle performance of the single-crystal ternary material and the advantage of the high discharge specific capacity and good rate performance of the polycrystalline ternary material without affecting compaction density of an electrode, so that a prepared battery has high charge and discharge specific capacities and initial Coulombic efficiency, good low-temperature performance and rate performance, and good high-temperature cycle performance.

### SUMMARY

A purpose of the present disclosure is to provide a double-layer-coated ternary material, a preparation method therefor, and a lithium-ion battery, to overcome a problem that a ternary positive electrode material in a conventional technology affects compaction density of an electrode and cannot ensure that a prepared battery has all of high charge and discharge specific capacities, and good low-temperature performance, rate performance, high-temperature cycle performance, and thermal stability.

To achieve the foregoing purpose, a first aspect of the present disclosure provides a double-layer-coated ternary material. The double-layer-coated ternary material includes a single-crystal high-nickel ternary material, a polycrystalline nano ternary material layer covering the single-crystal high-nickel ternary material, and a modified compound layer covering the polycrystalline nano ternary material layer. The modified compound layer includes a B-containing compound and an Al-containing compound.

A second aspect of the present disclosure provides a preparation method for a double-layer-coated ternary material. The preparation method includes the following steps:
(1) mixing a single-crystal high-nickel ternary material with a polycrystalline nano ternary material and performing first sintering, to obtain a single-layer-coated material; and
(2) mixing the single-layer-coated material with a modified compound and performing second sintering, to obtain the double-layer-coated ternary material, where the modified compound includes a B-containing compound and an Al-containing compound.

A third aspect of the present disclosure provides a double-layer-coated ternary material prepared by using the preparation method provided in the present disclosure.

A fourth aspect of the present disclosure provides a lithium-ion battery. The lithium-ion battery includes the double-layer-coated ternary material provided in the present disclosure.

According to the foregoing technical solutions, the present disclosure has the following beneficial effects.

In the present disclosure, a polycrystalline nano ternary material is used to cover a single-crystal high-nickel ternary material, and a polycrystalline nano material coating layer is formed on a surface of the single-crystal high-nickel ternary material. This can improve a lithium ion diffusion coefficient of the single-crystal material at an interface, to improve rate performance and a discharge specific capacity of the material. A modified compound at a second layer combines synergistic advantages of coating with a B-containing compound and an Al-containing compound. This can effectively improve initial Coulombic efficiency, room-temperature cycle performance, and high-temperature cycle performance of a battery. In addition, compared with a single-crystal high-nickel ternary material, a double-layer-coated ternary material prepared in the present disclosure does not affect compaction density of a positive electrode plate. An entire process does not introduce an organic solvent, poses no environmental safety risk, is low in costs, and facilitates industrial large-scale production.

### BRIEF DESCRIPTION OF DRAWINGS

FIG. 1 is a SEM image of a polycrystalline nano ternary material at a magnification of 30000 times in a specific implementation of the present disclosure;
FIG. 2 is a SEM image of a polycrystalline nano ternary material at a magnification of 1000 times in a specific implementation of the present disclosure;
FIG. 3 is a SEM image of a double-layer-coated ternary material at a magnification of 50000 times in a specific implementation of the present disclosure;
FIG. 4 is a SEM image of a double-layer-coated ternary material at a magnification of 1000 times in a specific implementation of the present disclosure;
FIG. 5 is a SEM image of a single-layer-coated material at a magnification of 50000 times obtained by coating a single-crystal high-nickel ternary material with a modified compound but without a polycrystalline nano ternary material in Comparative Example 2 of the present disclosure;
FIG. 6 is a SEM image of a single-layer-coated material at a magnification of 1000 times obtained by coating a single-crystal high-nickel ternary material with a modified compound but without a polycrystalline nano ternary material in Comparative Example 2 of the present disclosure;
FIG. 7 is an XRD diagram of products of a reaction between boric acid and LiOH on a surface of a single-layer-coated material LiNiₐCo_{b}Mn_{c}M_{d}O₂@nano LiNiₐCo_{b}Mn_{c}M_{d}O₂ in a specific implementation of the present disclosure; and
FIG. 8 is an XRD diagram of products of a reaction between boric acid and Li₂CO₃ on a surface of a single-layer-coated material LiNiₐCo_{b}Mn_{c}M_{d}O₂@nano LiNiₐCo_{b}Mn_{c}M_{d}O₂ in a specific implementation of the present disclosure.

### DESCRIPTION OF EMBODIMENTS

Endpoints of ranges and any values disclosed herein are not limited to the precise ranges or values, and the ranges or values should be understood to include values close to the ranges or values. For numerical ranges, endpoint values of the ranges may be combined with each other, endpoint values of the ranges and individual point values may be combined with each other, or individual point values may be combined with each other, to obtain one or more new numerical ranges, which should be considered to be specifically disclosed herein.

A first aspect of the present disclosure provides a double-layer-coated ternary material. The double-layer-coated ternary material includes a single-crystal high-nickel ternary material, a polycrystalline nano ternary material layer covering the single-crystal high-nickel ternary material, and a modified compound layer covering the polycrystalline nano ternary material layer. The modified compound layer includes a B-containing compound and an Al-containing compound.

A polycrystalline material has a higher specific capacity and better rate performance, and a lithium ion migration rate is further improved after nanocrystallization. In the present disclosure, a polycrystalline nano ternary material is used to cover the single-crystal high-nickel ternary material, and a polycrystalline nano material coating layer is formed on a surface of the single-crystal high-nickel ternary material. Both the single-crystal high-nickel material and the polycrystalline nano ternary material are ternary materials. When combined, the two materials are more likely to form a stable interface that facilitates migration of lithium ions from the polycrystalline material to the single-crystal material. This can improve a lithium ion diffusion coefficient of the single-crystal material at the interface, to improve rate performance and a discharge specific capacity of the material. A modified compound at a second layer includes the B-containing compound and the Al-containing compound that have good synergistic effect. This can effectively improve initial Coulombic efficiency, room-temperature cycle performance, and high-temperature cycle performance of the double-layer-coated ternary material.

In addition, in the present disclosure, the modified compound covers a surface of the polycrystalline nano ternary material, which can effectively reduce side reactions of an electrolyte. If the polycrystalline nano ternary material covers a surface of the modified compound, the polycrystalline nano ternary material has a large specific surface area and a large area of contact with the electrolyte, which increases side reactions of the electrolyte. Therefore, the modified compound also has a function of protecting the polycrystalline nano ternary material. In addition, lithium fast-ion conductors such as LiₓB_{y}O_{z} (1≤x≤5, 1≤y≤4, 2≤z≤10) and LiₘAlₙOₚ (1≤m≤5, 1≤n≤4, 2≤p≤10) may be formed on the surface of the modified compound at an outermost layer. LiₓB_{y}O_{z} and LiₘAlₙOₚ have good synergistic effect, and can improve performance of the polycrystalline nano ternary material, to improve performance of the double-layer-coated ternary material.

According to the present disclosure, preferably, the single-crystal high-nickel ternary material is a compound represented by a chemical formula LiNiₐCo_{b}Mn_{c}M_{d}O₂, 0.8≤a≤0.98, 0≤b≤0.1, 0.02≤c≤0.2, 0≤d≤0.005, a+b+c+d=1, and M is at least one of B, Mg, Al, Ca, Ti, V, Sr, Y, Zr, Nb, Mo, Ag, In, Sn, Sb, Ba, La, Ce, Ta, and W.

According to the present disclosure, preferably, the polycrystalline nano ternary material layer includes a polycrystalline nano ternary material, the polycrystalline nano ternary material is a compound represented by a chemical formula LiNiₜCo_{q}MnₛE_{f}O₂, 0.5≤t≤0.98, 0≤q≤0.2, 0.02≤s≤0.3, 0≤f≤0.01, t+q+s+f=1, and E is at least one of B, Mg, Al, Ca, Ti, V, Sr, Y, Zr, Nb, Mo, Ag, In, Sn, Sb, Ba, La, Ce, Ta, and W.

Doping a metal element to modify a structure of the single-crystal high-nickel ternary material or the polycrystalline nano ternary material can improve structural stability of the double-layer-coated ternary material to improve cycle performance, low-temperature performance, and rate performance of a battery, and can reduce a sintering temperature, a free lithium content, impedance, and the like of the single-crystal high-nickel ternary material or the polycrystalline nano ternary material.

Further, the polycrystalline nano ternary material is a polycrystalline nano high-nickel ternary material, the polycrystalline nano high-nickel ternary material is a compound represented by a chemical formula LiNiₜCo_{q}MnₛE_{f}O₂, 0.8≤t≤0.98, 0≤q≤0.1, 0.02≤s≤0.2, and 0≤f≤0.005.

According to the present disclosure, chemical composition of the single-crystal high-nickel ternary material (single-crystal LiNiₐCo_{b}Mn_{c}M_{d}O₂) may be the same as or different from chemical composition of the polycrystalline nano ternary material (nano LiNiₜCo_{q}MnₛE_{f}O₂). The chemical composition is preferably the same. When the single-crystal high-nickel ternary material and the polycrystalline nano ternary material have the same chemical composition, the single-crystal high-nickel ternary material and the polycrystalline nano ternary material have better compatibility, and no crack occurs between a base material, namely, the single-crystal high-nickel ternary material, and a coating, namely, the polycrystalline nano ternary material, during a cycle.

According to the present disclosure, preferably, an average particle size of the double-layer-coated ternary material ranges from 0.5 µm to 11 µm. According to the present disclosure, preferably, an average particle size of the single-crystal high-nickel ternary material ranges from 0.5 µm to 10 µm. The average particle size of the single-crystal high-nickel ternary material is an average primary particle size of the single-crystal high-nickel ternary material.

In the present disclosure, a primary particle size is a particle size of a single-crystal primary particle, and a secondary particle size is a particle size of a particle obtained after single-crystal primary particles are agglomerated. The single-crystal high-nickel ternary material is single-crystal primary particle, and the average particle size of the single-crystal high-nickel ternary material is the average primary particle size of the single-crystal high-nickel ternary material. The average particle size of the single-crystal high-nickel ternary material used as the base material may be designed to be slightly smaller. When the average particle size of the single-crystal high-nickel ternary material falls within the foregoing range, a corresponding lithium ion diffusion path is shortened, exhibiting advantage in discharge specific capacity, rate performance, impedance, and the like.

Further, the average particle size of the single-crystal high-nickel ternary material ranges from 2 µm to 6 µm.

In the present disclosure, an average particle size may be defined as a particle size at 50% of particle size distribution, namely, D₅₀. The average particle size is not particularly limited, and may be measured by using a laser diffraction method or by using a SEM. When the laser diffraction method is used, a particle size ranging from a submicron region to a few millimeters can be measured, thereby obtaining results with high distinguishability at high reproducibility.

According to the present disclosure, preferably, a thickness of the polycrystalline nano ternary material layer covering the single-crystal high-nickel ternary material ranges from 2 nm to 200 nm. The polycrystalline ternary material includes a large quantity of single-crystal particles, and the introduced polycrystalline nano ternary material has a small thickness. In this case, a total quantity of single crystals in the polycrystalline ternary material layer is small and there are few grain boundaries, which can effectively mitigate cracking of the polycrystalline material in a late cycle phase.

Further, the thickness of the polycrystalline nano ternary material layer covering the single-crystal high-nickel ternary material ranges from 5 nm to 100 nm.

In the present disclosure, a thickness of a coating layer is not particularly limited, and may be measured by using a SEM or a TEM.

According to the present disclosure, preferably, with a total weight of the double-layer-coated ternary material as a reference, in the modified compound layer, a content of the element B ranges from 100 ppm to 2000 ppm, preferably, from 300 ppm to 1500 ppm, and a content of the element Al ranges from 100 ppm to 3000 ppm, preferably, from 500 ppm to 2000 ppm. Herein, ppm is measured by mass, and specifically refers to a quantity of milligrams of the element B or the element Al contained in 1 kg of double-layer-coated ternary material.

In the present disclosure, the content of the element B and the content of the element Al may be measured by using inductively coupled plasma (ICP).

In the present disclosure, covering by the modified compound is a combination of dot-like covering and island-like covering, and the outer surface of the polycrystalline nano ternary material is not completely covered. The coating is in a form of a combination of a dispersed dot-like coating and an island-like coating. The thickness of the polycrystalline nano ternary material layer and a covering amount of the modified compound in the present disclosure are small, so that compaction density of a prepared electrode plate is not affected. In addition, when the content of the element B and the content of the element Al fall within the foregoing ranges, LiₓB_{y}O_{z} and LiₘAlₙOₚ formed after coating can exert their respective advantages, to achieve better synergistic effect.

A second aspect of the present disclosure provides a preparation method for a double-layer-coated ternary material. The preparation method includes the following steps:
(1) mix a single-crystal high-nickel ternary material with a polycrystalline nano ternary material and perform first sintering, to obtain a single-layer-coated material; and
(2) mix the single-layer-coated material with a modified compound and perform second sintering, to obtain the double-layer-coated ternary material, where the modified compound is a mixture including a B-containing compound and an Al-containing compound.

In the preparation method for the double-layer-coated ternary material in the second aspect of the present disclosure, types and sizes of the single-crystal high-nickel ternary material and the polycrystalline nano ternary material are all the same as those of the single-crystal high-nickel ternary material and the polycrystalline nano ternary material in the double-layer-coated ternary material described in the first aspect of the present disclosure. To avoid repetition, details are not described in the second aspect of the present disclosure, and a person skilled in the art shall not understand this as a limitation on the present disclosure.

According to the present disclosure, preferably, an average particle size of the single-crystal high-nickel ternary material ranges from 0.5 µm to 10 µm, preferably, from 2 µm to 6 µm.

According to the present disclosure, preferably, an average particle size of the polycrystalline nano ternary material ranges from 10 nm to 50 nm.

According to the present disclosure, preferably, in step (1), the single-crystal high-nickel ternary material and the polycrystalline nano ternary material are mixed at a weight ratio of (20-500):1.

According to the present disclosure, preferably, in step (2), the B-containing compound is calculated based on the element B, the Al-containing compound is calculated based on the element Al, and a weight ratio of the B-containing compound to the Al-containing compound in the modified compound is 1:(0.1-5).

According to the present disclosure, preferably, the B-containing compound is at least one of B₂O₃, H₃BO₃, LiBO₂, and Li₂B₄O₇.

According to the present disclosure, preferably, the Al-containing compound is at least one of Al₂O₃, boehmite, pseudo-boehmite, LiAlO₂, aluminium hydroxide, and Li₂Al₄O₇. When Al₂O₃ is selected as the Al-containing compound, a crystal form of Al₂O₃ may be one of a, β, γ, δ, and θ, or may be a mixture of two or more crystal forms.

According to the present disclosure, preferably, in step (2), the single-layer-coated material and the modified compound are mixed at a weight ratio of (100-1000):1.

According to the present disclosure, preferably, a temperature for the first sintering ranges from 600°C to 780°C, and a time ranges from 2 h to 12 h.

According to the present disclosure, preferably, a temperature for the second sintering ranges from 200°C to 500°C, and a time ranges from 2 h to 8 h.

According to the present disclosure, preferably, in step (2), the single-layer-coated material is first mixed with the B-containing compound and then mixed with the Al-containing compound, and then the second sintering is performed.

According to the present disclosure, the single-layer-coated material is first coated with the B-containing compound, and the compound may react with free lithium on a surface of the single-layer-coated material at a room temperature to generate a fast-ion conductor containing elements B and Li, which mainly improves a discharge specific capacity and initial Coulombic efficiency of the material. Reactivity of the Al-containing compound is lower than that of the B-containing compound. If the outer surface of the single-layer-coated material is first coated with the Al-containing compound, a part of the outer surface is covered by the Al-containing compound. As a result, there is a probability that the later-coated B-containing compound cannot react with free lithium on the surface of the single-layer-coated material. However, even if the Al-containing compound covers a surface of the B-containing compound and does not react with free lithium, a high-temperature cycle of the material is facilitated. Therefore, best coating effect can be achieved according to an order of the B-containing compound first and then the Al-containing compound.

In addition, the entire process does not introduce an organic solvent, poses no environmental safety risk, is low in costs, and facilitates industrial large-scale production.

According to specific implementations of the present disclosure, the preparation method for the double-layer-coated ternary material includes the following steps:
(1) weigh out the polycrystalline nano ternary material and the single-crystal high-nickel ternary material at the ratio, mix the materials in a mechanical fusion machine, add the mixed materials to a box furnace, perform the first sintering under air or oxygen, where the temperature for the first sintering ranges from 600°C to 780°C, and the time ranges from 2 h to 12 h, and perform sieving after cooling, to obtain the single-layer-coated material, which is denoted as LiNiₐCo_{b}Mn_{c}M_{d}O₂@nano LiNiₜCo_{q}MnₛE_{f}O₂; and
(2) add the single-layer-coated material and the B-containing compound to a high-speed mixer at a weight ratio of (100-1000):1 (preferably, (200-500):1), perform a stir at a rotational speed of 500 rpm to 1000 rpm for 3 min to 5 min and then perform a stir at a high rotational speed of 1500 rpm to 2000 rpm for 20 min to 30 min, add the Al-containing compound to the high-speed mixer so that a weight ratio of the Al-containing compound to the single-layer-coated material is 1:(100-1000) (preferably, 1:(200-800)), perform a stir at a rotational speed of 500 rpm to 1000 rpm for 3 min to 5 min and then perform a stir at a rotational speed of 1500 rpm to 2000 rpm for 20 min to 30 min, place the mixed materials in the box furnace, perform sintering at 200°C to 500°C for 2 h to 8 h under air or oxygen, and perform sieving after cooling, to obtain the double-layer-coated single-crystal high-nickel ternary material, which is denoted as LiNiₐCo_{b}Mn_{c}M_{d}O₂@nano LiNiₜCo_{q}MnₛE_{f}O₂@LiₓB_{y}O_{z}&LiₘAlₙOₚ.

According to the present disclosure, preferably, a preparation method for the single-crystal high-nickel ternary material includes the following steps: mix a precursor of the single-crystal high-nickel ternary material, a lithium source 1, and a dopant 1 together and perform third sintering and first crushing, to obtain the single-crystal high-nickel ternary material, where the dopant 1 is an oxide of metal M and/or a hydroxide of the metal M, and M is at least one of B, Mg, Al, Ca, Ti, V, Sr, Y, Zr, Nb, Mo, Ag, In, Sn, Sb, Ba, La, Ce, Ta, and W.

The precursor of the single-crystal high-nickel ternary material used in the present disclosure is commercially available.

According to the present disclosure, preferably, a preparation method for the polycrystalline nano ternary material includes the following steps: mix a precursor of the polycrystalline nano ternary material, a lithium source 2, and a dopant 2 together and perform fourth sintering and second crushing, to obtain the polycrystalline nano ternary material, where the dopant 2 is an oxide of metal E and/or a hydroxide of the metal E, and E is at least one of B, Mg, Al, Ca, Ti, V, Sr, Y, Zr, Nb, Mo, Ag, In, Sn, Sb, Ba, La, Ce, Ta, and W.

The precursor of the polycrystalline nano ternary material used in the present disclosure is self-prepared. According to a specific implementation of the present disclosure, a preparation method for the precursor of the polycrystalline nano ternary material includes the following steps: mix a nickel source, a cobalt source, a manganese source, and water together to prepare a mixed salt solution, mix the solution with a precipitating agent for a co-precipitation reaction, and age, concentrate, grind, dry, and depolymerize products of the co-precipitation reaction, to obtain the precursor of the polycrystalline nano ternary material. Preferably, the precipitating agent is a mixture of a sodium hydroxide solution and ammonia water.

According to the present disclosure, preferably, the nickel source is at least one of nickel sulfate, nickel chloride, and nickel oxalate, preferably, nickel sulfate.

According to the present disclosure, preferably, the cobalt source is at least one of cobalt sulfate, cobalt chloride, and cobalt oxalate, preferably, cobalt sulfate.

According to the present disclosure, preferably, the manganese source is at least one of manganese sulfate, manganese chloride, and manganese oxalate, preferably, manganese sulfate.

According to the present disclosure, preferably, the lithium source 1 and the lithium source 2 each are at least one of lithium hydroxide, lithium carbonate, lithium sulfate, lithium chloride, lithium acetate, lithium oxalate, and lithium nitrate, preferably, lithium hydroxide.

According to a specific implementation of the present disclosure, the preparation method for the single-crystal high-nickel ternary material includes the following steps:
add a precursor (Ni_{a'}CO_{b'}Mn_{c'}(OH)₂, where a'+b'+c'=1, and a':b':c'=a:b:c) of the single-crystal high-nickel ternary material, a lithium source, and a dopant to a high-speed mixer at a molar ratio of Li:Precursor:M=(1-1.1):1:(0-0.005), perform a stir at a rotational speed of 500 rpm to 1000 rpm for 3 min to 5 min and then perform a stir at a high rotational speed of 1500 rpm to 2000 rpm for 20 min to 30 min, place the mixed materials in a box furnace, perform sintering at 450°C to 780°C for 1 h to 3 h under air or oxygen and then increase the temperature to 600°C to 900°C for sintering for 8 h to 20 h under air or oxygen, perform roll crushing after sintering, and perform jet milling in a jet mill, to obtain the single-crystal high-nickel ternary material with an average particle size of 0.5 µm to 10 µm, which is represented by a chemical formula LiNiₐCo_{b}Mn_{c}M_{d}O₂.

0.8≤a≤0.98, 0≤b≤0.1, 0.02≤c≤0.2, 0≤d≤0.005, a+b+c+d=1, M is at least one of B, Mg, Al, Ca, Ti, V, Sr, Y, Zr, Nb, Mo, Ag, In, Sn, Sb, Ba, La, Ce, Ta, and W, and the dopant is an oxide of the metal M and/or a hydroxide of the metal M.

According to a specific implementation of the present disclosure, the preparation method for the polycrystalline nano ternary material includes the following steps:
(1) mix a nickel source, a cobalt source, and a manganese source with water at a molar ratio of Ni:Co:Mn=t':q':s' to prepare a mixed salt solution with a total metal content of 0.5 mol/L to 5 mol/L, pump the salt solution, a sodium hydroxide solution with a concentration of 1 mol/L to 10 mol/L, and ammonia water with a concentration of 0.5 mol/L to 5 mol/L into a reaction kettle at a specific flow rate by using a metering pump for a co-precipitation reaction, control pH of reaction liquid (products of the co-precipitation reaction) to be 11 or more, take samples during the period to test particle size distribution of slurry, transfer, when an average particle size of particles in the slurry increases to 2 µm to 3 µm, the reaction liquid to an aging kettle for aging, where an aging time ranges from 2 h to 15 h, concentrate the aged slurry by using a concentrator and then pump the concentrated slurry into a cavity of a sand mill, where a solid content of the concentrated slurry ranges from 30% to 60 wt%, a particle size of a zirconium bead of the sand mill ranges from 0.1 mm to 1 mm, a sanding time ranges from 0.5 h to 5 h, and an average particle size of particles in the slurry obtained after sanding ranges from 50 nm to 300 nm, perform freeze drying, and finally perform further depolymerization by using a jet mill, where classifier wheel frequency, feeding frequency, and induced draft fan frequency of the jet mill are 120 Hz to 180 Hz, 1 Hz to 5 Hz, and 5 Hz to 15 Hz respectively, and air jet pressure ranges from 0.2 MPa to 1 MPa, to obtain a precursor of the polycrystalline nano ternary material, which is represented by a chemical formula Ni_{t'}Co_{q'}Mn_{s'}(OH)₂, where t'+q'+s'=1, and t':q':s'=t:q:s; and
(2) add the precursor of the polycrystalline nano ternary material, a lithium source, and a dopant to a high-speed mixer at a molar ratio of Li:Precursor:E=(1-1.1):1:(0-0.005), perform a stir at a rotational speed of 500 rpm to 1000 rpm for 3 min to 5 min and then perform a stir at a high rotational speed of 1500 rpm to 2000 rpm for 20 min to 30 min, place the mixed materials in a box furnace, perform sintering at 450°C to 700°C for 1 h to 3 h under air or oxygen and then increase the temperature to 600°C to 820°C for sintering for 8 h to 20 h under air or oxygen, perform grinding by using a rotary wheel mill after sintering, and perform jet milling in the jet mill, to obtain the nano high-nickel ternary material with an average primary particle size of 10 nm to 100 nm, which is represented by a chemical formula LiNiₜCo_{q}MnₛE_{f}O₂.

0.5≤t≤0.98, 0≤q≤0.2, 0.02≤s≤0.3, 0≤f≤0.01, t+q+s+f=1, and E is at least one of B, Mg, Al, Ca, Ti, V, Sr, Y, Zr, Nb, Mo, Ag, In, Sn, Sb, Ba, La, Ce, Ta, and W.

According to the present disclosure, the chemical composition of the polycrystalline nano ternary material and the single-crystal high-nickel ternary material may be the same or different, preferably, the same. When the chemical composition of the polycrystalline nano ternary material is the same as the chemical composition of the single-crystal high-nickel ternary material, chemical composition of the precursor of the polycrystalline nano ternary material is the same as chemical composition of the precursor of the single-crystal high-nickel ternary material (morphology of the precursor of the polycrystalline nano ternary material is different from morphology of the precursor of the single-crystal high-nickel ternary material, and the precursor of the polycrystalline nano ternary material may be divided into smaller primary particles). The lithium sources used may be the same or different. The dopants used may be oxides and/or hydroxides including same doped metal.

A third aspect of the present disclosure provides a double-layer-coated ternary material prepared by using the preparation method provided in the present disclosure.

A fourth aspect of the present disclosure provides a positive electrode plate. The positive electrode plate includes the double-layer-coated ternary material provided in the present invention.

Preferably, compaction density of the positive electrode plate ranges from 3.5 g/cm³ to 3.9 g/cm³.

A fifth aspect of the present disclosure provides a lithium-ion battery. The lithium-ion battery includes the positive electrode plate provided in the present invention.

Preferably, a 0.1C charge specific capacity of the lithium-ion battery is at least 235 mAh/g, a 0.1C discharge specific capacity is at least 210 mAh/g, a 1C/0.1C capacity retention rate is at least 90%, a capacity retention rate after 100 cycles at a room temperature is at least 90%, and a capacity retention rate after 100 cycles at 45°C is at least 85%.

Preferably, the 0.1C charge specific capacity of the lithium-ion battery is at least 240 mAh/g, the 0.1C discharge specific capacity is at least 220 mAh/g, the 1C/0.1C capacity retention rate is at least 90%, the capacity retention rate after 100 cycles at the room temperature is at least 95%, and the capacity retention rate after 100 cycles at 45°C is at least 90%.

A sixth aspect of the present disclosure provides an electrical equipment. The electrical equipment includes the lithium-ion battery provided in the present disclosure.

The present disclosure is described in detail below by using examples. In the following examples, reagents used are conventional biochemical reagents unless otherwise specified, raw materials, instruments, devices, and the like used are available through market purchase or available through existing methods, reagent dosages described are reagent dosages in conventional experimental operations unless otherwise specified, and experimental methods described are conventional methods unless otherwise specified. Measurement methods in the following examples and comparative examples are specifically as follows.

A method for a SEM test is as follows: A field emission scanning electron microscope Sigma 300 from Zeiss in Germany is used to analyze morphology of related products, a scanning voltage is 3 kV, and magnifications are 3K×, 5K×, 10K×, 30K×, and 50K×. A powder sample is stuck on a conductive adhesive tape. Before the test, the sample is dried and stored in a vacuum drying oven.

A method for measuring a thickness of a first coating layer is as follows: An ion milling device from Leica company is used to prepare a cross-section of a material, and then a field emission scanning electron microscope GEMINI 300 from Carl Zeiss Optics Co., Ltd is used to test cross-sectional morphology of the material. The thickness of the first coating layer is determined by measuring a thickness of the polycrystalline nano ternary material on a surface of the single-crystal high-nickel ternary material.

A method for measuring a content of B and a content of Al is as follows: Inductively coupled plasma emission spectrometer is used to measure the content of B and the content of Al in a material.

A method for measuring average particle sizes of the single-crystal high-nickel ternary material, the polycrystalline nano ternary material, and the double-layer-coated ternary material is as follows: 0.2 g of single-crystal high-nickel ternary material, polycrystalline nano ternary material, or double-layer-coated ternary material is weighed out into a 50-mL beaker, then 10 mL of ethanol is added, and 1 mL of sodium hexametaphosphate dispersion liquid is added for ultrasonic dispersion for 10 min. Particle size distribution of the material is tested on the Mastersizer 3000.

A specific capacity test is as follows: Charging is performed at a constant current of 0.1C (1C=210 mA/g) and a constant voltage to reach 4.3 V, with a cutoff current of 0.01C, then discharging is performed at a constant current of 0.1C to reach 2.5 V, and a charge specific capacity, a discharge specific capacity, and initial Coulombic efficiency are recorded.

A rate performance test is as follows: Charging is performed at a constant current of 0.1C and a constant voltage to reach 4.3 V, with a cutoff current of 0.01C, then discharging is performed separately at a constant current of 0.1, 0.2C, 0.5C, and 1C to reach 2.5 V, and a 1C/0.1C capacity retention rate is calculated.

A room-temperature cycle test is as follows: Charging is performed at a constant current of 0.5C and a constant voltage to reach 4.3 V (a cutoff voltage of 0.02C), and then discharging is performed at a constant current of 1C to reach 2.5 V. 100 cycles are performed, and a capacity retention rate is calculated.

A high-temperature cycle test is as follows: The test is similar to the room-temperature cycle test, and a difference is that a battery is tested in a 45°C constant temperature box.

The following examples are used to describe preparation of a double-layer-coated single-crystal high-nickel ternary material.

### Example 1

### Step (1): Preparation of a precursor of a polycrystalline nano ternary material

1.183 kg of nickel sulfate hexahydrate, 0.07 kg of cobalt sulfate heptahydrate, and 0.042 kg of manganese sulfate monohydrate were weighed out so that a molar ratio of Ni:Co:Mn was 0.9:0.05:0.05, and deionized water was added for dissolution to obtain a mixed salt solution with a total metal ion concentration of 2 mol/L. A commercially available sodium hydroxide solution with a concentration of 32 wt% was diluted to 2 mol/L, then the mixed salt solution, the sodium hydroxide solution with a concentration of 2 mol/L, and ammonia water with a concentration of 4 mol/L were transferred to a 10-L reaction kettle by using a diaphragm pump for co-precipitation reaction, and a pH value of reaction liquid was adjusted to 11.8. When an average particle size of particles in test slurry increased to 2.8 µm, reaction products were transferred to an aging kettle for aging for 2 h. After the aged slurry was concentrated to a solid content of 40 %wt by using a concentrator, the slurry was transferred to an internal sanding cavity through an external circulation system of a sand mill, and was sanded for 3 h by using a 0.1-mm zirconium bead. An average particle size of particles in the slurry obtained after sanding was measured to be 100 nm. The slurry obtained after sanding was freeze-dried, and then dispersed and depolymerized by using a jet mill, where classifier wheel frequency, feeding frequency, and induced draft fan frequency of the jet mill were 150 Hz, 3 Hz, and 10 Hz respectively, and air jet pressure was 0.5 MPa, obtaining the precursor of the polycrystalline nano ternary material, which is represented by a chemical formula Ni_{0.9}Co_{0.05}Mn_{0.05}(OH)₂.

### Step (2): Preparation of a single-crystal high-nickel ternary material

Battery-grade lithium hydroxide, a commercially available single-crystal Ni_{0.9}Co_{0.05}Mn_{0.05}(OH)₂ precursor with an average particle size of 3 µm to 5 µm that was synthesized by using a batch process, nano zirconium oxide, and nano tantalum oxide were added to a high-speed mixer at a molar ratio of 1.04:0.995:0.003:0.001 for mixture, a stir was performed at a rotational speed of 800 rpm for 4 min, and then a stir was performed at a high rotational speed of 1800 rpm for 25 min. Then, the mixed materials were placed in a box furnace, and under oxygen, sintering was performed at 700°C for 2 h and then the temperature was increased to 830°C for sintering for 14 h. Next, crushing was performed by using a roll crusher and the jet mill, obtaining the single-crystal high-nickel ternary material, which is represented by a chemical formula Li(Ni_{0.9}Co_{0.05}Mn_{0.05})_{0.995}Zr_{0.003}Ta_{0.002}O₂.

### Step (3): Preparation of a polycrystalline nano ternary material

Battery-grade lithium hydroxide, the precursor prepared in Step (1), nano zirconium oxide, and nano tantalum oxide were added to the high-speed mixer at a molar ratio of 1.04:0.995:0.003:0.001 for mixture, a stir was performed at a rotational speed of 800 rpm for 4 min, and then a stir was performed at a high rotational speed of 1800 rpm for 25 min. Then, the mixed materials were placed in the box furnace, and under oxygen, sintering was performed at 600°C for 2 h and then the temperature was increased to 760°C for sintering for 12 h. Next, grinding was performed by using a rotary wheel mill and crushing was performed by using the jet mill, obtaining the polycrystalline nano ternary material, which is represented by a chemical formula Li(Ni_{0.9}Co_{0.05}Mn_{0.05})_{0.995}Zr_{0.003}Ta_{0.002}O₂.

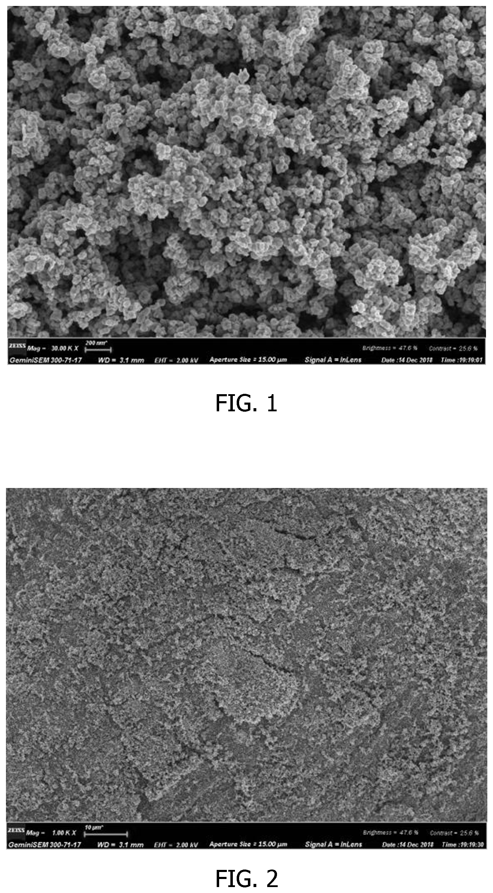

It can be learned from FIG. 1 and FIG. 2 that a primary particle size of the polycrystalline nano ternary material ranges from 10 nm to 50 nm, and dispersion is even.

### Step (4): Preparation of a single-layer-coated material

The single-crystal high-nickel ternary material prepared in Step (2) and the polycrystalline nano ternary material prepared in Step (3) were mixed in a mechanical fusion machine at a weight ratio of 100:1, then sintering was performed at 700°C for 10 h under oxygen in the box furnace, and sieving was performed after cooling, obtaining the single-layer-coated material.

### Step (5): Preparation of a double-layer-coated ternary material

The single-layer-coated material prepared in Step (4) and boric acid were added to the high-speed mixer at a weight ratio of 1:0.003, a stir was performed at a rotational speed of 800 rpm for 5 min, and then a stir was performed at a rotational speed of 1800 rpm for 25 min. Then, pseudo-boehmite was added to the high-speed mixer so that a weight ratio of the pseudo-boehmite to the single-layer-coated material was 0.0015:1, a weight ratio of the single-layer-coated material to a modified compound (the boric acid and the pseudo-boehmite) was 222:1, and a weight ratio of the element B to the element Al was 1:1.3. A stir was performed at a rotational speed of 800 rpm for 5 min and then a stir was performed at a rotational speed of 1800 rpm for 25 min. The mixed materials were placed in the box furnace, sintering was performed at 350°C for 5 h under oxygen, and sieving was performed after cooling, obtaining the double-layer-coated ternary material, denoted as NCM1.

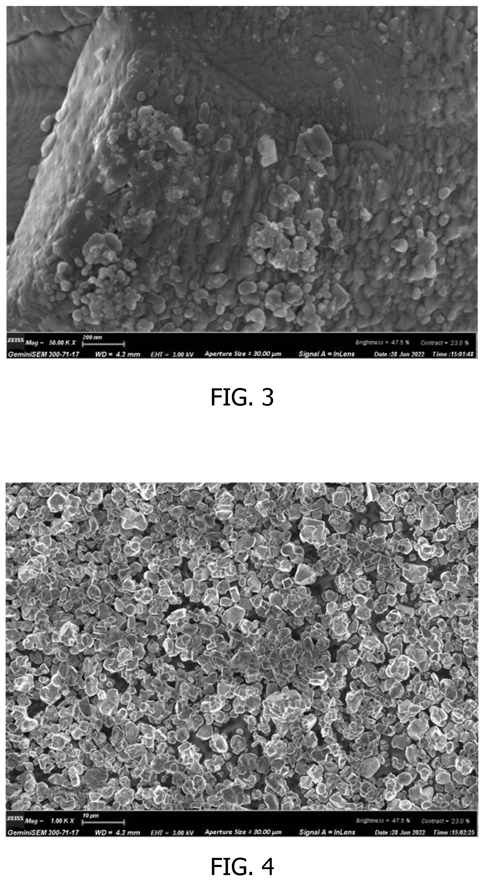

It can be learned from FIG. 3 that a surface of the single-crystal high-nickel ternary material is coated with a layer of polycrystalline nano ternary material, and there are some white spots coated with aluminium oxide on the polycrystalline nano ternary material. It can be learned from FIG. 4 that the synthesized double-layer-coated ternary material has obvious single-crystal particle characteristics.

### Example 2

Step (1) is the same as that in Example 1.

### Step (2): Preparation of a single-crystal high-nickel ternary material

Battery-grade lithium hydroxide, a commercially available single-crystal Ni_{0.9}Co_{0.05}Mn_{0.05}(OH)₂ precursor with an average particle size of 3 µm to 5 µm that was synthesized by using a batch process, nano yttrium oxide, and nano tungsten oxide were added to a high-speed mixer at a molar ratio of 1.03:0.996:0.0015:0.00033 for mixture, a stir was performed at a rotational speed of 800 rpm for 4 min, and then a stir was performed at a high rotational speed of 1800 rpm for 25 min. Then, the mixed materials were placed in a box furnace, and under oxygen, sintering was performed at 650°C for 3 h and then the temperature was increased to 850°C for sintering for 16 h. Next, crushing was performed by using a roll crusher and a jet mill, obtaining the single-crystal high-nickel ternary material, which is represented by a chemical formula Li(Ni_{0.9}Co_{0.05}Mn_{0.05})_{0.990}Y_{0.003}W_{0.001}O₂.

### Step (3): Preparation of a polycrystalline nano ternary material

Battery-grade lithium hydroxide, the precursor prepared in Step (1) in Example 1, nano yttrium oxide, and nano tungsten oxide were added to the high-speed mixer at a molar ratio of 1.03:0.996:0.0015:0.00033 for mixture, a stir was performed at a rotational speed of 800 rpm for 4 min, and then a stir was performed at a high rotational speed of 1800 rpm for 25 min. Then, the mixed materials were placed in the box furnace, and under oxygen, sintering was performed at 550°C for 3 h and then the temperature was increased to 730°C for sintering for 12 h. Next, grinding was performed by using a rotary wheel mill and crushing was performed by using the jet mill, obtaining the polycrystalline nano ternary material, which is represented by a chemical formula Li(Ni_{0.9}Co_{0.05}Mn_{0.05})_{0.996}Y_{0.003}W_{0.001}O₂.

### Step (4): Preparation of a single-layer-coated material

The single-crystal high-nickel ternary material prepared in Step (2) and the polycrystalline nano ternary material prepared in Step (3) were mixed in a mechanical fusion machine at a weight ratio of 200:1, then sintering was performed at 720°C for 10 h under oxygen in the box furnace, and sieving was performed after cooling, obtaining the single-layer-coated material.

### Step (5): Preparation of a double-layer-coated ternary material

The single-layer-coated material prepared in Step (4) and boron oxide were added to the high-speed mixer at a weight ratio of 1:0.004, a stir was performed at a rotational speed of 800 rpm for 5 min, and then a stir was performed at a rotational speed of 1800 rpm for 25 min. Then, aluminium oxide was added to the high-speed mixer so that a weight ratio of the aluminium oxide to the single-layer-coated material was 0.002:1, a weight ratio of the single-layer-coated material to a modified compound (the boron oxide and the aluminium oxide) was 167:1, and a weight ratio of the element B to the element Al was 1:0.88. A stir was performed at a rotational speed of 800 rpm for 5 min and then a stir was performed at a rotational speed of 1800 rpm for 25 min. The mixed materials were placed in the box furnace, sintering was performed at 380°C for 6 h under oxygen, and sieving was performed after cooling, obtaining the double-layer-coated single-crystal high-nickel ternary material, denoted as NCM2.

### Example 3

Step (1) is the same as that in Example 1.

### Step (2): Preparation of a single-crystal high-nickel ternary material

Battery-grade lithium hydroxide, a commercially available single-crystal Ni_{0.9}Co_{0.05}Mn_{0.05}(OH)₂ precursor with an average particle size of 3 µm to 5 µm that was synthesized by using a batch process, nano strontium carbonate, and nano aluminium hydroxide were added to a high-speed mixer at a molar ratio of 1.05:0.993:0.003:0.004 for mixture, a stir was performed at a rotational speed of 800 rpm for 4 min, and then a stir was performed at a high rotational speed of 1800 rpm for 25 min. Then, the mixed materials were placed in a box furnace, and under oxygen, sintering was performed at 600°C for 2 h and then the temperature was increased to 800°C for sintering for 12 h. Next, crushing was performed by using a roll crusher and a jet mill, obtaining the single-crystal high-nickel ternary material, which is represented by a chemical formula Li(Ni_{0.9}Co_{0.05}Mn_{0.05})_{0.993}Sr_{0.003}Al_{0.004}O₂.

### Step (3): Preparation of a polycrystalline nano ternary material

Battery-grade lithium hydroxide, the precursor prepared in Step (1) in Example 1, nano strontium carbonate, and nano aluminium hydroxide were added to the high-speed mixer at a molar ratio of 1.03:0.993:0.003:0.004 for mixture, a stir was performed at a rotational speed of 800 rpm for 4 min, and then a stir was performed at a high rotational speed of 1800 rpm for 25 min. Then, the mixed materials were placed in the box furnace, and under oxygen, sintering was performed at 520°C for 2 h and then the temperature was increased to 710°C for sintering for 10 h. Next, grinding was performed by using a rotary wheel mill and crushing was performed by using the jet mill, obtaining the polycrystalline nano ternary material, which is represented by a chemical formula Li(Ni_{0.9}Co_{0.05}Mn_{0.05})_{0.993}Sr_{0.003}Al_{0.004}O₂.

### Step (4): Preparation of a single-layer-coated material

The single-crystal high-nickel ternary material prepared in Step (2) and the polycrystalline nano ternary material prepared in Step (3) were mixed in a mechanical fusion machine at a weight ratio of 300:1, then sintering was performed at 650°C for 10 h under oxygen in the box furnace, and sieving was performed after cooling, obtaining the single-layer-coated material.

### Step (5): Preparation of a double-layer-coated single-crystal high-nickel ternary material

The single-layer-coated material prepared in Step (4) and LiBO₂ were added to the high-speed mixer at a weight ratio of 1:0.003, a stir was performed at a rotational speed of 800 rpm for 5 min, and then a stir was performed at a rotational speed of 1800 rpm for 25 min. Then, LiAlO₂ was added to the high-speed mixer so that a weight ratio of LiAlO₂ to the single-layer-coated material was 0.003:1, a weight ratio of the single-layer-coated material to a modified compound (LiBO₂ and LiAlO₂) was 167:1, and a weight ratio of the element B to the element Al was 1:1.92. A stir was performed at a rotational speed of 800 rpm for 5 min and then a stir was performed at a rotational speed of 1800 rpm for 25 min. The mixed materials were placed in the box furnace, sintering was performed at 450°C for 6 h under oxygen, and sieving was performed after cooling, obtaining the double-layer-coated single-crystal high-nickel ternary material, denoted as NCM3.

### Example 4

Steps (1) to (4) are the same as corresponding steps in Example 3.

### Step (5): Preparation of a double-layer-coated ternary material

The single-layer-coated material prepared in Step (4) in Example 3 and Li₂B₄O₇ were added to a high-speed mixer at a weight ratio of 1:0.002, a stir was performed at a rotational speed of 800 rpm for 5 min, and then a stir was performed at a rotational speed of 1800 rpm for 25 min. Then, Li₂Al₄O₇ was added to the high-speed mixer so that a weight ratio of Li₂Al₄O₇ to the single-layer-coated material was 0.004:1, a weight ratio of the single-layer-coated material to a modified compound (Li₂B₄O₇ and Li₂Al₄O₇) was 167:1, and a weight ratio of the element B to the element Al was 1:3.63. A stir was performed at a rotational speed of 800 rpm for 5 min and then a stir was performed at a rotational speed of 1800 rpm for 25 min. The mixed materials were placed in a box furnace, sintering was performed at 400°C for 5 h under oxygen, and sieving was performed after cooling, obtaining the double-layer-coated ternary material, denoted as NCM4.

### Example 5

A double-layer-coated ternary material was prepared according to the method in Example 1. A difference is that a surface of a single-layer-coated material was simultaneously coated with boric acid and pseudo-boehmite.

Specifically, Step (5) is as follows: The single-layer-coated material prepared in Step (4) in Example 1, boric acid, and pseudo-boehmite were added to a high-speed mixer at a weight ratio of 1:0.003:0.0015, a stir was performed at a rotational speed of 800 rpm for 5 min, and then a stir was performed at a rotational speed of 1800 rpm for 25 min. The mixed materials were placed in a box furnace, sintering was performed at 350°C for 5 h under oxygen, and sieving was performed after cooling, obtaining the double-layer-coated ternary material, denoted as NCM5.

### Example 6

A double-layer-coated ternary material was prepared according to the method in Example 1. A difference is that, in Step (4), "The single-crystal high-nickel ternary material prepared in Step (2) and the polycrystalline nano ternary material prepared in Step (3) ... at a weight ratio of 100:1" was replaced by "The single-crystal high-nickel ternary material prepared in Step (2) and the polycrystalline nano ternary material prepared in Step (3) ... at a weight ratio of 10:1".

Finally, the double-layer-coated ternary material was obtained, denoted as NCM6.

### Example 7

A double-layer-coated ternary material was prepared according to the method in Example 1. A difference is that, in Step (5), "The single-layer-coated material prepared in Step (4) and boric acid ... at a weight ratio of 1:0.003" was replaced by "The single-layer-coated material prepared in Step (4) and boric acid ... at a weight ratio of 1:0.011", and "a weight ratio of the single-layer-coated material to a modified compound (the boric acid and the pseudo-boehmite) was 222:1, and a weight ratio of the element B to the element Al was 1:1.3" was replaced by "a weight ratio of the single-layer-coated material to a modified compound (the boric acid and the pseudo-boehmite) was 80:1, and a weight ratio of the element B to the element Al was 1:0.35".

Finally, the double-layer-coated ternary material was obtained, denoted as NCM7.

### Example 8

A double-layer-coated ternary material was prepared according to the method in Example 1. A difference is that, in Step (5), "a weight ratio of the pseudo-boehmite to the single-layer-coated material was 0.0015:1, a weight ratio of the single-layer-coated material to a modified compound (the boric acid and the pseudo-boehmite) was 222:1, and a weight ratio of the element B to the element Al was 1:1.3" was replaced by "a weight ratio of the pseudo-boehmite to the single-layer-coated material was 0.0065:1, a weight ratio of the single-layer-coated material to a modified compound (the boric acid and the pseudo-boehmite) was 105:1, and a weight ratio of the element B to the element Al was 1:5.5".

Finally, the double-layer-coated ternary material was obtained, denoted as NCM8.

### Comparative Example 1

A single-crystal high-nickel ternary material was prepared according to the method in Example 1 (that is, only Step (2) in Example 1, without coating the material with a polycrystalline nano ternary material and a modified compound including a B-containing compound and an Al-containing compound).

The single-crystal high-nickel ternary material represented by a chemical formula Li(Ni_{0.9}Co_{0.05}Mn_{0.05})_{0.995}Zr_{0.003}Ta_{0.002}O₂ was obtained, denoted as NCM-D1.

### Comparative Example 2

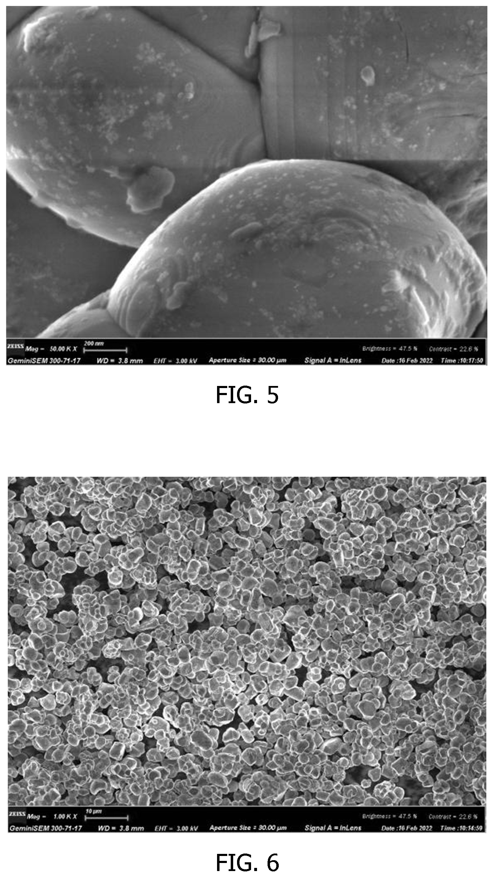

A single-crystal high-nickel ternary material was prepared according to the method in Example 1 (that is, only Step (2) in Example 1), and the single-crystal high-nickel ternary material was coated with a modified compound but without a polycrystalline nano ternary material. Specifically, the single-crystal high-nickel ternary material prepared in Step (2) and boric acid were added to a high-speed mixer at a weight ratio of 1:0.003, a stir was performed at a rotational speed of 800 rpm for 5 min, and then a stir was performed at a rotational speed of 1800 rpm for 25 min. Then, pseudo-boehmite was added to the high-speed mixer so that a weight ratio of the pseudo-boehmite to the single-crystal high-nickel ternary material was 0.0015:1. A stir was performed at a rotational speed of 800 rpm for 5 min and then a stir was performed at a rotational speed of 1800 rpm for 25 min. The mixed materials were placed in a box furnace, sintering was performed at 350°C for 5 h under oxygen, and sieving was performed after cooling, obtaining a single-layer-coated material, denoted as NCM-D2. It can be learned from FIG. 5 and FIG. 6 that, the obtained single-layer-coated material is in the form of single-crystal particles overall, and there is an obvious island-like coating on a surface of the material.

### Comparative Example 3

A single-layer-coated material, denoted as NCM-D3, was prepared according to the method of Steps (1) to (4) in Example 1.

In other words, a single-crystal high-nickel ternary material was prepared, and the single-crystal high-nickel ternary material was coated with a polycrystalline nano ternary material but without a modified compound.

Product parameters of NCM1 to NCM8 prepared in the foregoing examples and NCM-D1, NCM-D2, and NCM-D3 prepared in the comparative examples are shown in Table 1.

**Table 1**

| Number | Thickness of a first coating layer, nm | Content of B in a second coating layer, ppm | Content of Al in the second coating layer, ppm | Particle size of a single-crystal high-nickel ternary material, µm | Particle size of a polycrystalline nano ternary material, µm | Total particle size of particles of a double-layer-coated material, µm |
|---|---|---|---|---|---|---|
| Example 1 | 55 | 520 | 675 | 4.21 | 0.01 | 4.33 |
| Example 2 | 28 | 1250 | 1100 | 4.35 | 0.012 | 4.62 |
| Example 3 | 18 | 650 | 1250 | 4.27 | 0.012 | 4.54 |
| Example 4 | 18 | 510 | 1850 | 4.21 | 0.012 | 4.55 |
| Example 5 | 51 | 520 | 675 | 4.26 | 0.012 | 4.33 |
| Example 6 | 180 | 530 | 687 | 4.22 | 0.011 | 4.62 |
| Example 7 | 56 | 1920 | 675 | 4.23 | 0.012 | 4.39 |
| Example 8 | 54 | 527 | 2900 | 4.29 | 0.012 | 4.35 |
| Comparative Example 1 | / | / | / | 4.25 | / | 4.25 |
| Comparative Example 2 | / | 533 | 669 | 4.33 | / | 4.34 |
| Comparative Example 3 | 55 | / | / | 4.25 | 0.01 | 4.35 |

It is noted that, in Table 1, the first coating layer is the polycrystalline nano ternary material, the second coating layer is the modified compound, the content of B and the content of Al is measured with a total weight of the double-layer-coated ternary material as a reference, and the particle sizes of both the single-crystal high-nickel ternary material and the polycrystalline nano ternary material are average primary particle sizes.

### Test Example 1: Tests for compaction density of electrode plates

NCM1 to NCM8 prepared in the foregoing examples and NCM-D1, NCM-D2, and NCM-D3 prepared in the comparative examples were used as positive electrode materials to separately prepare samples. Three materials, namely, the positive electrode material, a conductive agent, and PVDF, were mixed at a mass ratio of 100:2.5:2.5, where PVDF was a PVDF/NMP solution with a concentration of 5 wt%, and the conductive agent was Super-P and carbon nanotubes. After mixture, slurry was passed through a 200-mesh sieve, and placed over one side of clean aluminium foil by using a coating machine, and a 120°C drying oven was used for drying. Then, 10 small positive electrode discs with a diameter d of 15 mm and corresponding small aluminium foil discs were cut by using a sampler. Electrode plates and aluminium foil were weighed out, and an average weight m1 of the electrode plates and an average weight m2 of the aluminium foil were calculated. The electrode plates were cut into strips with a width of 10 cm, and rolled into shape by using a roller press at pressure of 2 MPa. Next, a thickness a1 of the electrode plates obtained after compaction and a thickness a2 of the aluminium foil were measured by using a vernier caliper, where compaction density=(m1-m2)÷[π(d/2)²(a1-a2)]. Results are shown in Table 2.

### Test Example 2: Tests for battery performance

NCM1 to NCM8 prepared in the foregoing examples and NCM-D1, NCM-D2, and NCM-D3 prepared in the comparative examples were used as positive electrode materials to separately prepare samples. Three materials, namely, the positive electrode material, a conductive agent, and PVDF, were mixed at a mass ratio of 100:2.5:2.5, where PVDF was a PVDF/NMP solution with a concentration of 5 wt%, and the conductive agent was Super-P and carbon nanotubes. After mixture, slurry was passed through a 200-mesh sieve, and placed over one side of clean aluminium foil by using a coating machine, and a 120°C drying oven was used for drying. Then, small positive electrode discs with a diameter d of 15 mm were cut by using a sampler, a lithium metal sheet was selected as a negative electrode, a Celgard 2300 microporous membrane was selected as a separator, an electrolyte was 1-mol/L LiPF₆/ethylene carbonate (EC)+dimethyl carbonate (DMC) (a volume ratio was 1:1), and a CR2025 button battery was assembled in a glovebox. Electrochemical performance was tested by using a Neware 3008 battery testing system. Test results are shown in Table 2.

**Table 2**

| Number | Compactio n density, g/cm³ | 0.1C charge specific capacit y, mAh/g | 0.1C discharg e specific capacity, mAh/g | Initial Coulombic efficiency, % | 1C/0.1C capacity retentio n rate, % | Capacity retention rate after 100 cycles at a room temperature, % | Capacit y retentio n rate after 100 cycles at 45°C, % |
|---|---|---|---|---|---|---|---|
| Example 1 | 3.55 | 245.8 | 224.4 | 91.3 | 92.5 | 96.8 | 92.7 |
| Example 2 | 3.59 | 246.6 | 223.4 | 90.6 | 93.6 | 97.8 | 93.5 |
| Example 3 | 3.57 | 244.2 | 223.4 | 91.5 | 91.7 | 96.1 | 92.3 |
| Example 4 | 3.55 | 243.1 | 220.5 | 90.7 | 90.4 | 95.6 | 91.3 |
| Example 5 | 3.56 | 239.2 | 216.5 | 90.5 | 90.3 | 96 | 91.6 |
| Example 6 | 3.54 | 248 | 227.1 | 91.6 | 94 | 92.1 | 88.5 |
| Example 7 | 3.56 | 242.5 | 220.2 | 90.8 | 90.8 | 94.1 | 90.2 |
| Example 8 | 3.57 | 237.5 | 214.3 | 90.4 | 90.1 | 98 | 94.5 |
| Comparativ e Example 1 | 3.58 | 231.7 | 194.4 | 83.9 | 82.1 | 72.3 | 65 |
| Comparativ e Example 2 | 3.6 | 236.7 | 209.5 | 88.5 | 86.9 | 97.2 | 94 |
| Comparativ e Example 3 | 3.53 | 238.3 | 212.3 | 89.1 | 89.2 | 88.7 | 85.5 |

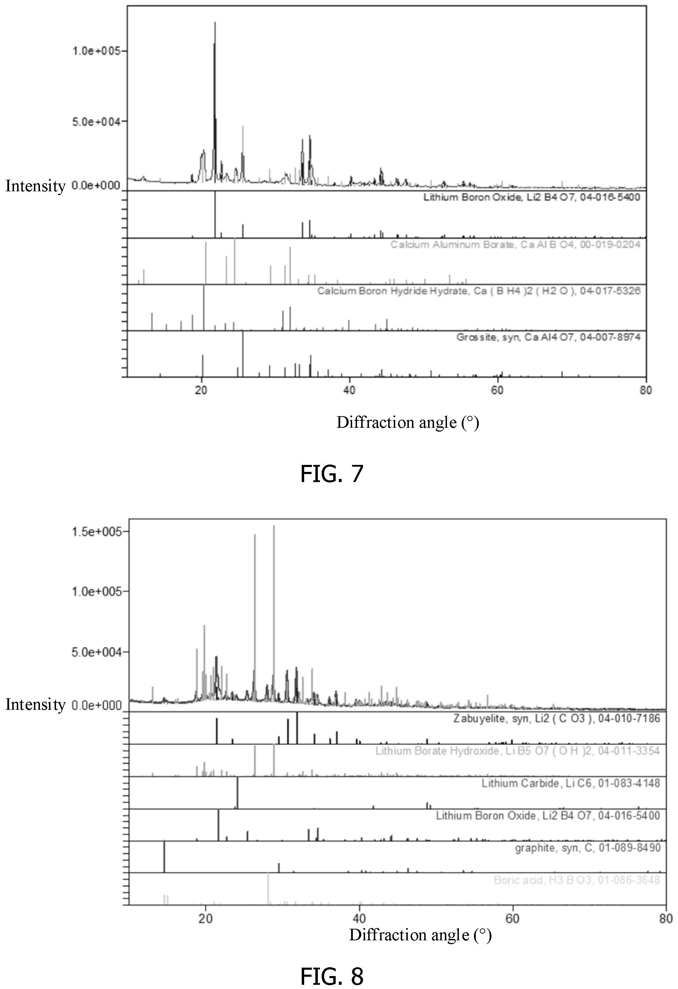

It can be learned from the results in Table 2 that, compaction density of electrode plates made of the double-layer-coated ternary materials in Examples 1 to 8 does not change significantly compared with compaction density of an electrode plate made of the single-crystal high-nickel ternary material in Comparative Example 1, but first-cycle charge and discharge specific capacities, initial Coulombic efficiency, 1C/0.1C capacity retention rates, room-temperature cycle performance, and 45°C high-temperature cycle performance of batteries made of the double-layer-coated ternary materials in Examples 1 to 8 are greatly improved compared with an original single crystal. The comparison data of Example 1 and Comparative Example 2 shows that the single-layer-coated material NCM-D2 in Comparative Example 2 is not coated with a first layer of nano ternary material, and first-cycle charge and discharge specific capacities and initial Coulombic efficiency of a prepared battery are lower, but cycle performance is slightly better. The comparison data of Example 1 and Comparative Example 3 shows that the single-layer-coated material NCM-D3 in Comparative Example 3 is not coated with a second layer of B-containing compound and Al-containing compound, first-cycle charge and discharge specific capacities and initial Coulombic efficiency of a prepared battery are lower, and cycle performance is much poorer. In addition, the comparison data of Example 1 and Example 5 shows that first-cycle charge and discharge specific capacities in the manner in which the B-containing compound and the Al-containing compound are sequentially mixed with the product of first coating are higher than those in the manner in which the two compounds are simultaneously mixed with the product of first coating. A reason is that a compound LiₓB_{y}O_{z} formed on a surface primarily contributes to capacity improvement. If the two compounds are simultaneously mixed, a surface of the single-layer-coated material LiNiₐCo_{b}Mn_{c}M_{d}O₂@nano LiNiₐCo_{b}Mn_{c}M_{d}O₂ faces competition from the two compounds, causing a part of the B-containing compound to adhere to a surface of the Al-containing compound. Consequently, capacity improvement cannot be achieved, resulting in a low capacity. If the B-containing compound is first mixed, due to hydrogen bond and intermolecular force, the B-containing compound can react with LiOH and Li₂CO₃ on the surface at the room temperature to adhere to the surface of the single-layer-coated material, and subsequent coating with the Al-containing compound improves cycle performance of the material. It can be learned from FIG. 7 and FIG. 8 that, at the room temperature, H₃BO₃ can react with LiOH or Li₂CO₃ to generate a lithium-containing compound such as lithium tetraborate or lithium pentaborate.

The comparison data of Example 1 and Example 6 shows that, when a nano ternary material layer is excessively thick, although a prepared battery has better rate performance and a higher capacity, an increased proportion of the polycrystalline material leads to higher internal stress due to anisotropy of the polycrystalline material. Consequently, side reactions increase during a cycle, and room-temperature cycles and high-temperature cycles are degraded obviously. The comparison data of Example 1 and Examples 7 and 8 shows that when a coating content of B in a surface of the double-layer-coated material increases, a discharge specific capacity and initial Coulombic efficiency of a prepared battery are higher, but the increased content of B may cause B to be precipitated at a negative electrode during a cycle, degrading room-temperature cycle performance and high-temperature cycle performance. When a coating content of Al in the surface of the double-layer-coated material increases, the capacity and the initial Coulombic efficiency of the prepared battery are lower, but room-temperature cycles and high-temperature cycles are greatly improved.

Preferred implementations of the present disclosure are described in detail above, but the present disclosure is not limited thereto. Within the technical concept scope of the present disclosure, a plurality of simple modifications may be made to the technical solutions of the present disclosure, including combinations of technical features in any other appropriate manner. These simple modifications and combinations should also be considered as content disclosed in the present disclosure, and all fall within the protection scope of the present disclosure.

## Claims

1. A double-layer-coated ternary material, wherein the double-layer-coated ternary material comprises a single-crystal high-nickel ternary material, a polycrystalline nano ternary material layer covering the single-crystal high-nickel ternary material, and a modified compound layer covering the polycrystalline nano ternary material layer, and the modified compound layer comprises a B-containing compound and an Al-containing compound.

2. The double-layer-coated ternary material according to claim 1, wherein the single-crystal high-nickel ternary material is a compound represented by a chemical formula LiNiₐCo_{b}Mn_{c}M_{d}O₂, 0.8≤a≤0.98, 0≤b≤0.1, 0.02≤c≤0.2, 0≤d≤0.005, a+b+c+d=1, and M is at least one of B, Mg, Al, Ca, Ti, V, Sr, Y, Zr, Nb, Mo, Ag, In, Sn, Sb, Ba, La, Ce, Ta, and W.

3. The double-layer-coated ternary material according to claim 1 or 2, wherein the polycrystalline nano ternary material layer comprises a polycrystalline nano ternary material, the polycrystalline nano ternary material is a compound represented by a chemical formula LiNiₜCo_{q}MnₛE_{f}O₂, 0.5≤t≤0.98, 0≤q≤0.2, 0.02≤s≤0.3, 0≤f≤0.01, t+q+s+f=1, and E is at least one of B, Mg, Al, Ca, Ti, V, Sr, Y, Zr, Nb, Mo, Ag, In, Sn, Sb, Ba, La, Ce, Ta, and W.

4. The double-layer-coated ternary material according to claim 3, wherein 0.8≤t≤0.98, 0≤q≤0.1, 0.02≤s≤0.2, 0≤f≤0.005, and t+q+s+f=1.

5. The double-layer-coated ternary material according to any one of claims 1 to 4, wherein an average particle size of the double-layer-coated ternary material ranges from 0.5 µm to 11 µm.

6. The double-layer-coated ternary material according to any one of claims 1 to 5, wherein an average particle size of the single-crystal high-nickel ternary material ranges from 0.5 µm to 10 µm.

7. The double-layer-coated ternary material according to any one of claims 1 to 5, wherein an average particle size of the single-crystal high-nickel ternary material ranges from 2 µm to 6 µm.

8. The double-layer-coated ternary material according to any one of claims 1 to 7, wherein a thickness of the polycrystalline nano ternary material layer ranges from 2 nm to 200 nm.

9. The double-layer-coated ternary material according to any one of claims 1 to 7, wherein a thickness of the polycrystalline nano ternary material layer ranges from 5 nm to 100 nm.

10. The double-layer-coated ternary material according to any one of claims 1 to 9, wherein in the modified compound layer, a content of the element B ranges from 100 ppm to 2000 ppm and a content of the element Al ranges from 100 ppm to 3000 ppm with a total weight of the double-layer-coated ternary material as a reference.

11. The double-layer-coated ternary material according to any one of claims 1 to 9, wherein in the modified compound layer, a content of the element B ranges from 300 ppm to 1500 ppm and a content of the element Al ranges from 500 ppm to 2000 ppm with a total weight of the double-layer-coated ternary material as a reference.

12. A preparation method for a double-layer-coated ternary material, wherein the preparation method comprises the following steps:
(1) mixing a single-crystal high-nickel ternary material with a polycrystalline nano ternary material and performing first sintering, to obtain a single-layer-coated material; and
(2) mixing the single-layer-coated material with a modified compound and performing second sintering, to obtain the double-layer-coated ternary material, wherein the modified compound comprises a B-containing compound and an Al-containing compound.

13. The preparation method according to claim 12, wherein an average particle size of the single-crystal high-nickel ternary material ranges from 0.5 µm to 10 µm.

14. The preparation method according to claim 12 or 13, wherein an average particle size of the polycrystalline nano ternary material ranges from 10 nm to 50 nm.

15. The preparation method according to any one of claims 12 to 14, wherein in step (1), the single-crystal high-nickel ternary material and the polycrystalline nano ternary material are mixed at a weight ratio of (20-500):1.

16. The preparation method according to any one of claims 12 to 15, wherein in step (2), the B-containing compound is calculated based on the element B, the Al-containing compound is calculated based on the element Al, and a weight ratio of the B-containing compound to the Al-containing compound in the modified compound is 1:(0.1-5).

17. The preparation method according to any one of claims 12 to 16, wherein in step (2), the single-layer-coated material and the modified compound are mixed at a weight ratio of (100-1000):1.

18. A double-layer-coated ternary material prepared by using the preparation method according to any one of claims 12 to 17.

19. A lithium-ion battery, wherein the lithium-ion battery comprises the double-layer-coated ternary material according to any one of claims 1 to 11 or the double-layer-coated ternary material according to claim 18.

20. The lithium-ion battery according to claim 19, wherein a 0.1C charge specific capacity of the lithium-ion battery is at least 235 mAh/g, a 0.1C discharge specific capacity is at least 210 mAh/g, a 1C/0.1C capacity retention rate is at least 90%, a capacity retention rate after 100 cycles at a room temperature is at least 90%, and a capacity retention rate after 100 cycles at 45°C is at least 85%.
